# FASCICULE DE BREVET EUROPEEN

(11) **EP 1 030 199 B1**
(45) Date de publication et mention de la délivrance du brevet: **23.11.2005**
(21) Numéro de dépôt: 00400208.5
(22) Date de dépôt: 27.01.2000
(51) Int. Cl.: G02B 6/16, G02B 6/22

(54) **Fibre de ligne pour systèmes de transmission à fibre optique à multiplexage en longueurs d'onde**
Optische Faser für Wellenlängenmultiplex-Übertragungssysteme
Line fiber for WDM optical fiber transmission systems

(30) Priorité: 18.02.1999 FR 9902028
(43) Date de publication de la demande: 23.08.2000
(73) Titulaire: Draka Comteq B.V., 1018 TX Amsterdam (NL)
(72) Inventeur: de Montmorillon, Louis-Anne, 75017 Paris (FR); Nouchi, Pascale, 78600 Maisons Laffitte (FR); Rousseau, Jean-Claude, 78400 Chatou (FR); Sauvageon, Raphaelle, 74230 Thones (FR); Chariot, Jean Francois, 78160 Marly le Roi (FR); Bertaina, Alain, 91140 Villebon sur Yvette (FR)
(74) Mandataire: Blokland, Arie

(56) Documents cités:
- EP-A- 0 724 171
- EP-A- 0 859 247
- WO-A-97/33188
- US-A- 5 483 612
- MASAO KATO, KENJI KURUKAWA, YOSHIAKI MIYAJIMA: "A new design for dispersion-shifted fiber with an effective core area larger than 100 um2 and good bending characteristics" OFC'98 TECHNICAL DIGEST, vol. 1, 22 - 27 février 1998, pages 301-302, XP002104987
- NOUCHI P ET AL: "New dispersion shifted fiber with effective area larger than 90 mu m/sup 2/" PROCEEDINGS OF THE EUROPEAN CONFERENCE ON OPTICAL COMMUNICATION, vol. 1, 15 - 19 septembre 1996, pages 49-52, XP002092143
- NOUCHI P: "Maximum effective area for non-zero dispersion-shifted fiber" OFC '98. OPTICAL FIBER COMMUNICATION CONFERENCE AND EXHIBIT TECHNICAL DIGEST. CONFERENCE EDITION, SAN JOSE, CA, FEBR. 22 - 27, 1998, page 303/304 304 XP002105703 OPTICAL SOCIETY OF AMERICA ISBN: 0-7803-4415-4
- BHAGAVATULA V A ET AL: "DISPERSION-SHIFTED SINGLE-MODE FIBER FOR HIGH-BIT-RATE AND MULTIWAVELENGTH SYSTEMS" OPTICAL FIBER COMMUNICATION. SUMMARIES OF PAPERS PRESENTED AT THE CONFERENCE OFC '95, SAN DIEGO, FEB. 26 - MAR. 3, 1995, 26 février 1995 (1995-02-26), page 259/260 XP000647265 INSTITUTE OF ELECTRICAL AND ELECTRONICS ENGINEERS ISBN: 0-7803-2654-7

## Description

La présente invention concerne le domaine des transmissions par fibre optique, et plus particulièrement le domaine des transmissions en multiplexage de longueurs d'onde à fibre de ligne à dispersion décalée.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueurs d'onde, il est avantageux de gérer la dispersion chromatique, notamment pour des débits par canal supérieurs ou égaux à 10 Gbit/s; l'objectif est d'obtenir, pour toutes les valeurs de longueur d'onde du multiplex, une compensation chromatique cumulée sensiblement nulle sur la liaison, de sorte à limiter l'élargissement des impulsions. Une valeur cumulée de quelques centaines de ps/nm pour la dispersion est acceptable. Il est aussi intéressant d'éviter au voisinage des longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de sorte à éviter ou limiter les distorsions entre les canaux du multiplex.

Sont apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique est sensiblement nulle; c'est à dire que la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF (acronyme de l'anglais "non-zero dispersion shifted fibers") des fibres à dispersion décalée, présentant une dispersion chromatique non-nulle pour les longueurs d'onde auxquelles elles sont utilisées. Il a été proposé, pour des systèmes de transmission à fibre optique à multiplexage en longueurs d'onde, d'utiliser comme fibre de ligne de la fibre NZ-DSF, et de compenser la dispersion chromatique par des sections de fibre de compensation de dispersion (DCF, acronyme de "dispersion compensating fiber"). Un exemple d'un tel système de transmission est décrit dans M. Nishimura et autres, Dispersion compensating fibers and their applications, OFC'96 Technical Digest ThA.

Cette solution présente l'inconvénient de ne permettre que de faibles marges en puissance, ce qui rend difficile un fonctionnement du système de transmission dans des conditions réalistes, et notamment pour des systèmes de transmissions à multiplexage en longueurs d'onde présentant un grand nombre de canaux.

Il a aussi été proposé d'utiliser des fibres DCF, pour corriger la dispersion chromatique induite par une fibre de ligne à saut d'indice ou fibre SMF (acronyme de l'anglais "single mode fiber"). Un tel usage d'une fibre de compensation de dispersion est mentionné dans L. Grüner-Nielsen et autres, Large volume Manufacturing of dispersion compensating fibers, OFC'98 Technical Digest TuD5. Un inconvénient de ce type de fibre est son coût élevé.

La demanderesse commercialise sous la référence ASMF 200 une telle fibre monomode à saut d'indice présentant une longueur d'onde d'annulation de la dispersion chromatique entre 1300 et 1320 nm, et une dispersion chromatique inférieure ou égale à 3,5 ps/(nm.km) dans une plage de 1285-1330 nm, et de 17 ps/(nm.km) à 1550 nm. La pente de dispersion chromatique à 1550 nm est de l'ordre de 0,056 ps/(nm².km). Cette fibre est du genre de celle mentionnée comme fibre de ligne dans l'article précité de L. Grüner-Nielsen et autres.

Par rapport à des systèmes NZ-DSF avec une compensation utilisant de la fibre DCF, une configuration SMF et DCF présente l'avantage d'une très faible pénalité à forte puissance optique, autrement dit d'une meilleure résistance aux effets non-linéaires, et notamment au mélange à quatre ondes. Ceci assure un fonctionnement correct des systèmes de transmission non seulement dans les conditions du laboratoire, mais aussi dans des conditions de terrain. Cette configuration présente toutefois l'inconvénient d'un coût près de deux fois plus élevé.

Un problème nouveau se pose aussi pour une telle configuration SMF/DCF, pour des transmissions à très hauts débits, typiquement pour des transmissions à Nx40 Gbit/s ou plus, dans la mesure où la taille des tronçons - pas d'amplification et de compensation - ne permet pas de compenser efficacement la distorsion apportée sur chaque tronçon par la dispersion et la non-linéarité.

L'invention propose une solution à ce problème nouveau. Plus généralement, elle apporte une solution au problème de l'augmentation du débit par canal, dans des systèmes de transmission à multiplexage en longueurs d'onde; la solution de l'invention permet de conserver une marge en puissance compatible avec des conditions de fonctionnement de terrain. Elle permet aussi de limiter le coût du système.

Plus précisément l'invention propose une fibre optique monomode présentant pour une longueur d'onde de 1550 nm :
- une aire effective supérieure ou égale à 60 µm²;
- une dispersion chromatique comprise entre 6 et 10 ps/(nm.km); et
- une pente de dispersion chromatique inférieure en valeur absolue à 0,07 ps/(nm².km).

Avantageusement, la fibre présente une dispersion chromatique à 1550 nm entre 7 et 9 ps/(nm.km).

De préférence, la fibre présente une dispersion chromatique supérieure ou égale à 7 ps/(nm.km) entre 1530 et 1620 nm.

Dans un mode de réalisation, la fibre présente une pente de dispersion chromatique à 1550 nm inférieure à 0,05 ps/(nm².km).

Elle peut avantageusement avoir une surface effective supérieure ou égale à 90 µm²;

De préférence, la fibre présente un rayon de mode à 1550 nm supérieur à 4 µm.

Dans un autre mode de réalisation, la fibre présente une atténuation à 1550 nm inférieure ou égale à 0,23 dB/km.

De préférence, la fibre présente une dispersion modale de polarisation inférieure ou égale à 0,08 ps.km^{-0,5}.

Dans un mode de réalisation, la fibre présente un profil d'indice en trapèze avec anneau.

Dans un autre mode de réalisation, la fibre présente un profil d'indice coaxial avec anneau.

Dans encore un autre mode de réalisation, elle présente un profil d'indice coaxial avec une partie externe enterrée.

L'invention propose aussi un système de transmission à fibre optique à multiplexage en longueurs d'onde, comprenant comme fibre de ligne une telle fibre.

Dans un mode de réalisation, le système de transmission comprend en outre de la fibre de compensation de dispersion.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique du profil d'indice d'une fibre selon un premier mode de réalisation de l'invention;
- figure 2, une représentation schématique du profil d'indice d'une fibre selon un second mode de réalisation de l'invention;
- figure 3, une représentation schématique du profil d'indice d'une fibre selon un troisième mode de réalisation de l'invention;
- figure 4, une représentation schématique du profil d'indice d'une fibre selon un quatrième mode de réalisation de l'invention;
- figure 5, une représentation schématique du profil d'indice d'une fibre selon un cinquième mode de réalisation de l'invention;
- figure 6, une représentation schématique du profil d'indice d'une fibre selon un sixième mode de réalisation de l'invention;
- figure 7, un graphe de la dispersion en fonction de la longueur d'onde pour différentes fibres selon l'invention;
- figure 8, un graphe de la pente de dispersion en fonction de la longueur d'onde pour différentes fibres selon l'invention.

L'invention propose d'utiliser comme fibre de ligne dans un système de transmission à multiplexage en longueurs d'onde une fibre monomode, qui présente une dispersion chromatique plus faible que la fibre à saut d'indice existante, mais qui conserve par ailleurs des caractéristiques analogues.

L'invention permet ainsi de conserver les avantages techniques apportés par l'utilisation de la fibre à saut d'indice connue, et notamment la diminution des effets non-linéaires du fait de
- la forte valeur de la surface effective, typiquement au-dessus de 70 ou 80 µm² pour la fibre classique;
- la valeur importante de la dispersion chromatique, typiquement au-dessus de 15 ps/(nm.km) pour la fibre classique.

La diminution de la dispersion chromatique selon l'invention permet de diminuer la quantité de fibre DCF nécessaire pour assurer la compensation de la dispersion chromatique. On abaisse ainsi le coût du système de transmission.

Le fait que la valeur de la dispersion chromatique de la fibre de l'invention reste voisine de 8 ps/(nm.km) à 1550 nm assure néanmoins que les effets non-linéaires restent limités. De fait, dans la plage de longueurs d'onde du multiplex, entre 1530 et 1620 nm, la dispersion chromatique reste supérieure à 7 ps/(nm.km). L'invention rend possible la réalisation de systèmes à multiplexage en longueurs d'onde, avec un débit par canal supérieur ou égal à 40 Gbit/s.

La fibre de l'invention permet d'atteindre, pour un taux d'erreur sur les bits de 10⁻¹⁰, une pénalité inférieure à 2,5 dB par rapport à une transmission idéale, pour le canal le plus pénalisé parmi les 32 canaux d'un système de transmission à multiplexage en longueurs d'onde. A titre de comparaison, pour le même système de transmission, la pénalité pour une fibre de ligne de l'art antérieur est de l'ordre de 4 dB.

Les caractéristiques préférées de la fibre de l'invention sont donc les suivantes:
- aire effective supérieure ou égale à 60 µm², voire de préférence supérieure à 90 µm²;
- dispersion chromatique à 1550 nm comprise entre 6 et 10 ps/(nm.km), et de préférence entre 7 et 9 ps/(nm.km);
- dispersion chromatique supérieure ou égale à 7 ps/(nm.km) entre 1530 et 1620 nm;
- pente de dispersion chromatique à 1550 nm inférieure en valeur absolue à 0,07 ps/(nm².km), de préférence inférieure à 0,05 ps/(nm².km);
- rayon de mode W02 à 1550 nm supérieur à 4 µm;
- atténuation à 1550 nm inférieure ou égale à 0,23 dB/km;
- dispersion modale de polarisation inférieure ou égale à 0,08 ps.km^{-0,5}.

On donne dans la suite de la description en référence aux figures des exemples de profils de fibre permettant d'obtenir de telles valeurs.

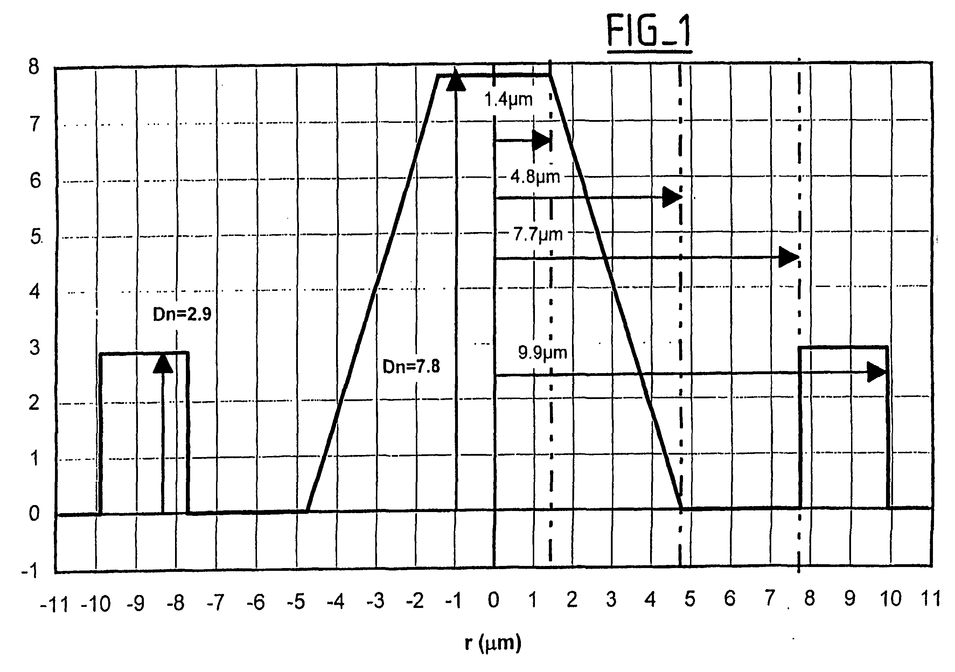

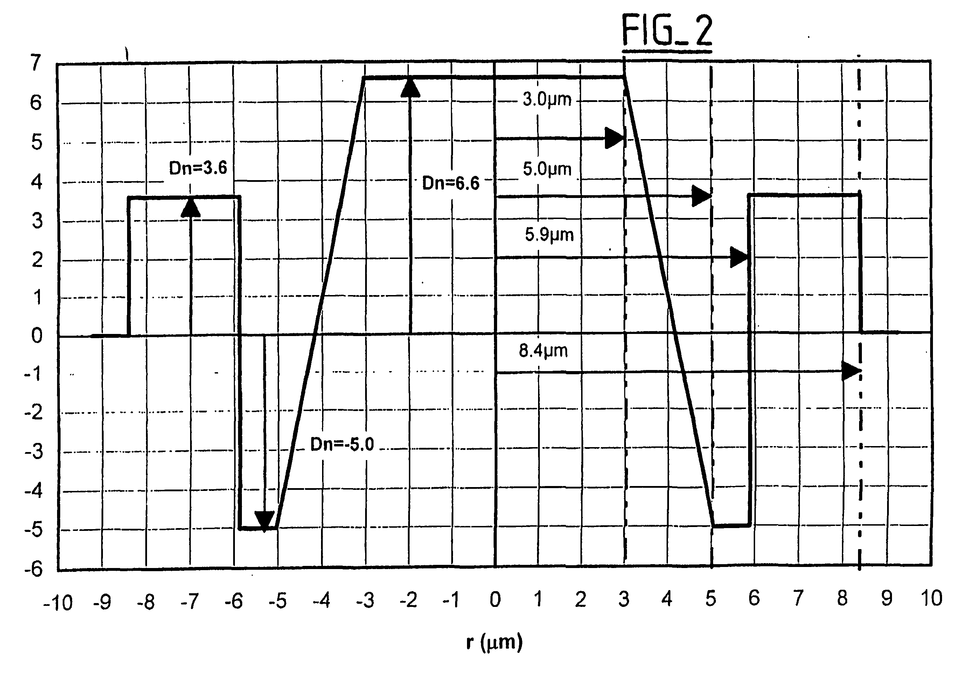

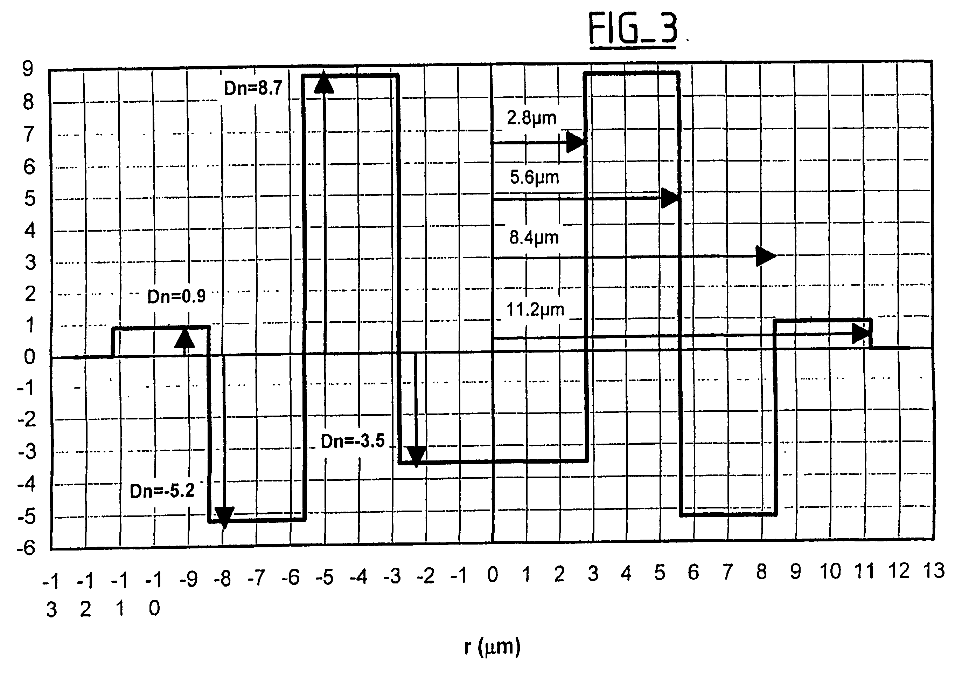

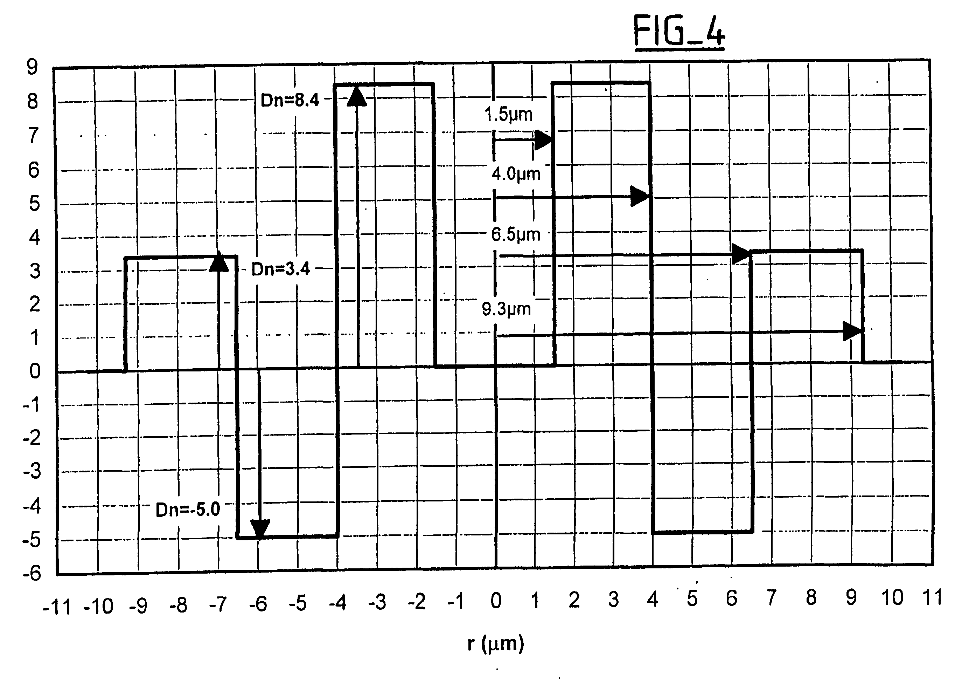

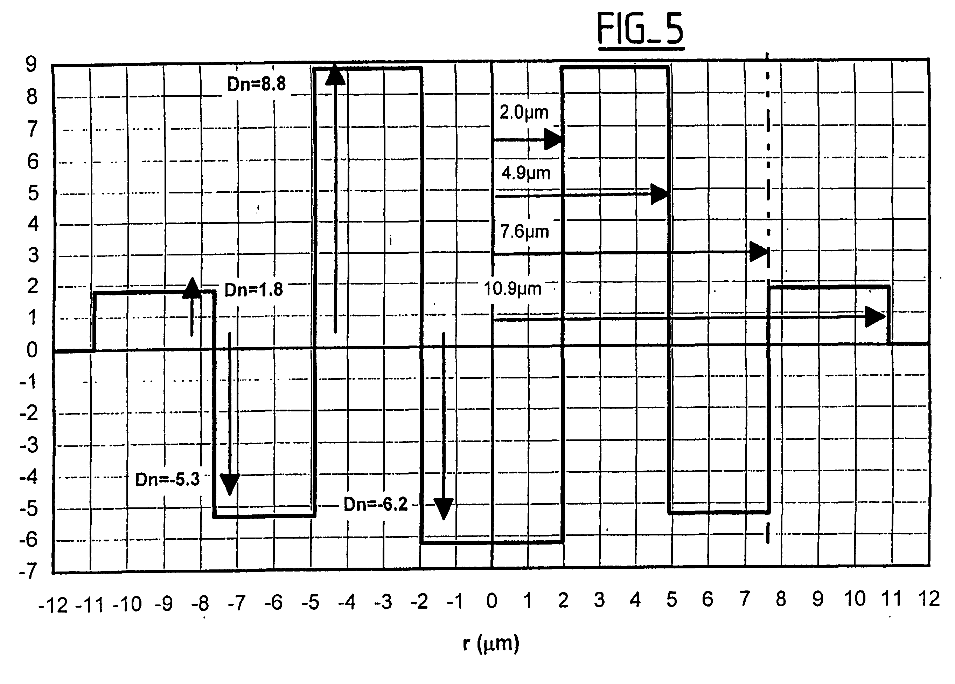

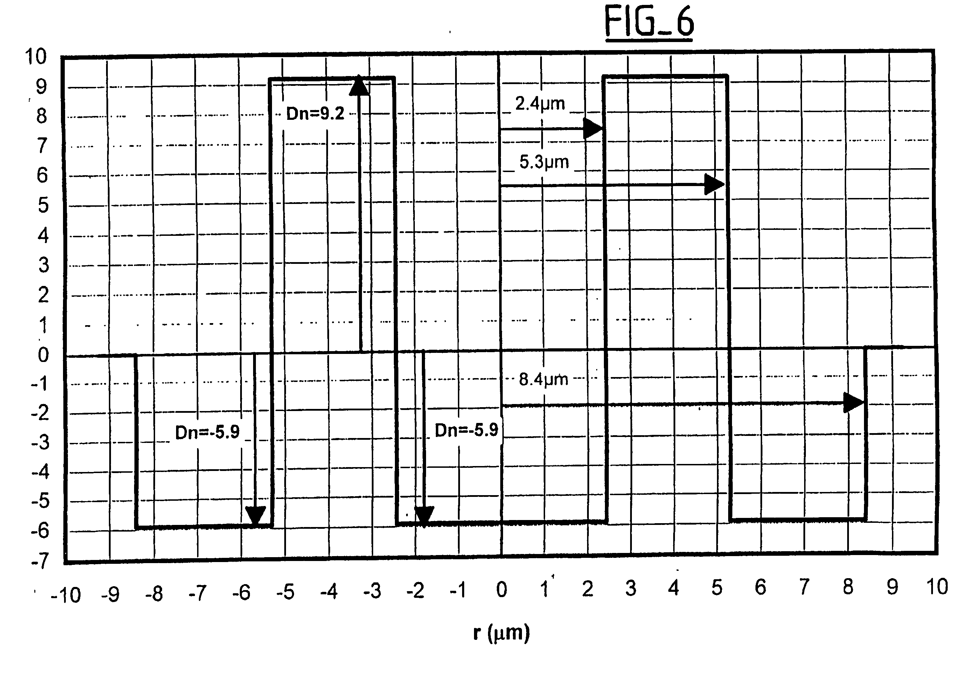

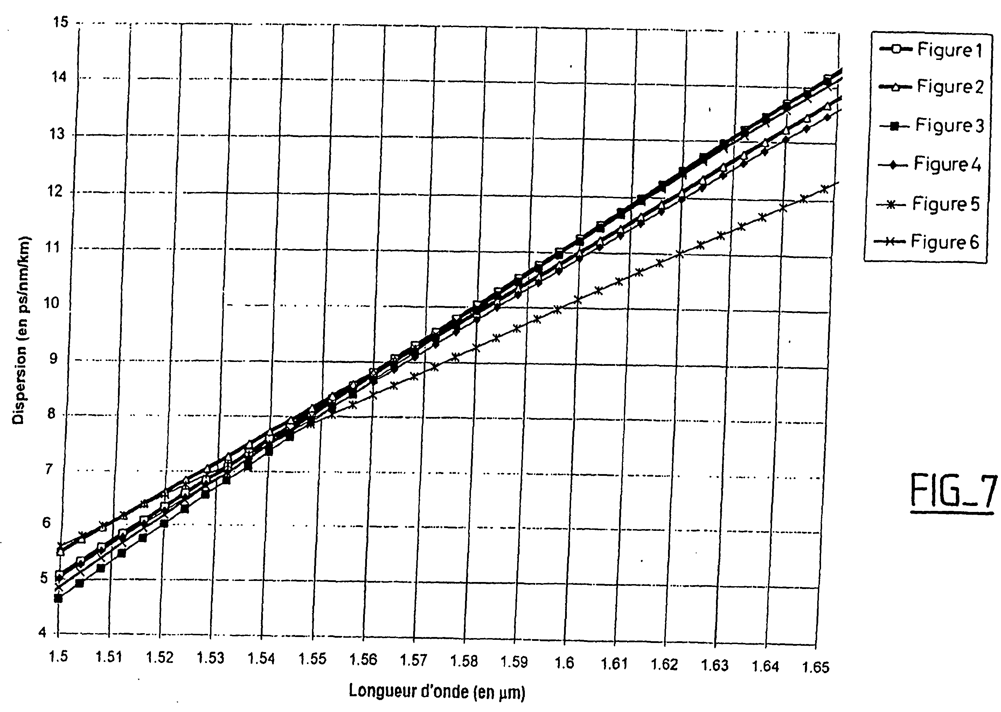

La figure 1 montre une représentation schématique du profil d'indice d'une fibre selon un premier mode de réalisation de invention; dans ce mode de réalisation, le profil d'indice est un profil d'indice du type trapèze avec anneau, qui présente, en partant du centre de la fibre:
- une partie centrale avec un indice supérieur à l'indice de la gaine;
- une première partie annulaire sur laquelle l'indice décroît de façon sensiblement linéaire;
   l'ensemble constituant une fibre à profil dit "en trapèze".

Autour de la première partie annulaire, la fibre présente une partie d'indice sensiblement constant puis une deuxième partie annulaire d'indice supérieur à celui de la gaine, formant un anneau autour du profil en trapèze.

Les valeurs d'indices et de rayons dans le mode de réalisation de la figure sont les suivantes. La partie centrale présente un rayon r₁ de 1,4 µm et son indice présente avec l'indice de la gaine une différence Δn₁ de 7,8.10⁻³.

L'indice décroît de façon sensiblement linéaire pour passer de la valeur Δn₁ à une valeur nulle, entre les rayons r₁ et r₂ = 4,8 µm.

La partie d'indice sensiblement constant s'étend entre les rayons r₂ et r₃ = 7,7 µm, et son indice est égal à celui de la gaine.

La deuxième partie annulaire s'étend entre les rayons r₃ et r₄ = 9,9 µm, sur une épaisseur de 2,2 µm; la différence Δn₄ entre son indice et celui de la gaine est de 2,9.10⁻³.

Ces valeurs permettent d'obtenir une fibre présentant les caractéristiques suivantes:
- longueur d'onde de coupure théorique λ_{cth}: 1770 nm
- longueur d'onde λ₀ d'annulation de la dispersion chromatique: 1430 nm;
- pente de dispersion chromatique à 1550 nm : 0,062 ps/(nm².km);
- dispersion chromatique à 1550 nm : 8 ps/(nm.km);
- rayon de mode W02 à 1550 nm : 4,7 µm;
- aire effective à 1550 nm : 65 µm²;
- atténuation du fait des courbures : 1,4.10⁻⁴ dB;
- sensibilité aux micro-courbures à 1550 nm: 0,62.

L'atténuation du fait des courbures est l'atténuation provoquée par l'enroulement de 100 tours de fibre autour d'un rayon de 30 mm, mesurée à 1550 nm. La sensibilité aux micro-courbures est mesurée en valeur relative par rapport à la fibre ASMF 200 mentionnée plus haut, par une méthode connue en soi.

La longueur d'onde de coupure λ_{cth} est généralement supérieure de deux à quatre centaines de nanomètres à la longueur d'onde effectivement mesurée sur le câble. De ce fait, la longueur d'onde de coupure sur câble de la fibre de la figure 1 est inférieure à 1500 nm, et la fibre est effectivement monomode dans la plage du multiplex.

Les valeurs de consigne des rayons et des indices données en référence à la figure peuvent varier, la fibre conservant toujours ses propriétés. Les plages de tolérance autour des valeurs de consigne données ci-dessus sont mentionnées plus bas.

La figure 2 montre une représentation schématique du profil d'indice d'une fibre selon un deuxième mode de réalisation de l'invention; dans ce mode de réalisation, le profil d'indice est un profil d'indice du type trapèze à gaine enterrée avec anneau; autrement dit, par rapport au profil de la figure 1, la partie d'indice sensiblement constant qui entoure le trapèze présente un indice inférieur à l'indice de la gaine de la fibre. On utilise donc pour le profil de la figure 2 les mêmes notations qu'à la figure 1 pour ce qui est des rayons et des indices.

Les caractéristiques géométriques du profil de la figure 2 sont les suivantes:
r₁ = 3,0 µm
r₂ = 5,0 µm
r₃ = 5,9 µm
r₄ = 8,4 µm
Δn₁ = 6,6
Δn₃ = - 5,0
Δn₄ = 3,6

Ces voleurs permettent d'obtenir une fibre présentant les caractéristiques suivantes:
- longueur d'onde de coupure théorique λ_{cth} = 1620 nm
- longueur d'onde λ₀ d'annulation de la dispersion chromatique : 1410 nm;
- pente de dispersion chromatique à 1550 nm : 0,055 ps/(nm².km);
- dispersion chromatique à 1550 nm : 8 ps/(nm.km);
- rayon de mode W02 à 1550 nm : 4,6 µm;
- aire effective à 1550 nm : 65 µm²;
- atténuation du fait des courbures: 3.10⁻⁴ dB;
- sensibilité aux micro-courbures à 1550 nm: 0,69.

Comme dans le cas de la figure 1, des variations des indices et des rayons par rapport aux valeurs de consigne données en référence à la figure 2 permettent néanmoins d'obtenir une fibre selon l'invention. Le tableau qui suit donne les tolérances autour des valeurs de consigne, sur la première ligne pour le mode de réalisation de la figure 1, et sur la deuxième ligne pour le mode de réalisation de la figure 2. Les rayons sont en micromètres et les valeurs d'indice sont à multiplier par 10⁻³.

| r₁ | r₂ | r₃ | r₄ | Δn₁ | Δn₃ | Δn₄ |
|---|---|---|---|---|---|---|
| 1,4±0,1 | 4,8±0,5 | 7,7±0,8 | 9,9±1,0 | 7,8±0,5 | 0±0,5 | 2,9±0,5 |
| 3,0±0,3 | 5,0±0,5 | 5,9±0,6 | 8,4±0,8 | 6,6±0,5 | -5,0±0,5 | 3,6±0,5 |

Les figures 3, 4 et 5 montrent respectivement une représentation schématique du profil d'indice d'une fibre selon les troisième, quatrième et cinquième modes de réalisation de l'invention; dans ces modes de réalisation, le profil d'indice est un profil d'indice du type coaxial avec anneau, qui présente, en partant du centre de la fibre:
- une partie centrale avec un indice sensiblement constant;
- une première partie annulaire d'indice supérieur à l'indice de la gaine, et aussi supérieur à l'indice de la partie centrale,
   l'ensemble constituant une fibre à profil dit "coaxial".

Autour de la première partie annulaire, la fibre présente une partie enterrée d'indice inférieur ou sensiblement égal à celui de la gaine, puis une deuxième partie annulaire d'indice supérieur à celui de la gaine, formant un anneau autour du profil coaxial.

Les valeurs d'indice et de rayon dans les troisième, quatrième et cinquième modes de réalisation sont données dans le tableau suivant - étant entendu que les fibres dans ces modes de réalisation présentent le profil des figures 3, 4 et 5. Les rayons sont donnés en micromètres, et les indices sont à multiplier par 10⁻³.

| r₁ | r₂ | r₃ | r₄ | Δn₁ | Δn₂ | Δn₃ | Δn₄ |
|---|---|---|---|---|---|---|---|
| 2,8 | 5,6 | 8,4 | 11,2 | -3,5 | 8,7 | -5,2 | 0,9 |
| 1,5 | 4,0 | 6,5 | 9,3 | 0 | 8,4 | -5,0 | 3,4 |
| 2,0 | 4,9 | 7,6 | 10,9 | -6,2 | 8,8 | -5,3 | 1,8 |

Ces divers modes de réalisation à profil coaxial plus anneau permettent d'obtenir des fibres selon l'invention, dont les caractéristiques sont données dans le tableau suivant, sur les lignes correspondantes :

| λ_{cth} (nm) | λ₀ (nm) | dC/dλ ps/(nm².km) | C ps/(nm.km) | W02 (µm) | S_{eff} (µm²) | PC (dB) | S_{µc} |
|---|---|---|---|---|---|---|---|
| 1700 | 1440 | 0,066 | 8 | 4,2 | 118 | 2,8.10⁻⁴ | 1,04 |
| 1710 | 1400 | 0,045 | 8 | 4,3 | 71 | 5,9.10⁻⁴ | 0,74 |
| 1630 | 1430 | 0,058 | 8 | 4,1 | 93 | 2,4.10⁻⁵ | 0,6 |

Comme dans le cas des figures précédentes, des variations des valeurs des rayons et des indices autour des valeurs de consigne sont possibles. Le tableau ci-dessous donne les tolérances autour des valeurs de consigne, avec les mêmes unités.

| r₁ | r₂ | r₃ | r₄ | Δn₁ | Δn₂ | Δn₃ | Δn₄ |
|---|---|---|---|---|---|---|---|
| 2,8±0,3 | 5,6±0,6 | 8,4±0,8 | 11,2±1,1 | -3,5±0,5 | 8,7±0,5 | -5,2±0,5 | 0,9±0,5 |
| 1,5±02 | 4,0±0,4 | 6,5±0,6 | 9,3±0,39 | 0±0,5 | 8,4±0,5 | -5,0±0,5 | 3,4±0,5 |
| 2,0±0,2 | 4,9±0,5 | 7,6±0,8 | 10,9±1,1 | -6,2±0,5 | 8,8±0,5 | -5,3±0,5 | 1,8±0,5 |

La figure 6 montre une représentation schématique du profil d'indice d'une fibre selon un sixième mode de réalisation de l'invention; le profil de la figure 6 est un profil coaxial, entouré d'une partie enterrée. La fibre présente, en partant du centre :
- une partie centrale avec un indice sensiblement constant;
- une partie annulaire d'indice supérieur à l'indice de la gaine, et aussi supérieur à l'indice de la partie centrale ;
- une partie enterrée d'indice inférieur à celui de la gaine.

Les valeurs d'indice et de rayon dans le mode de réalisation de la figure sont les suivantes. La partie centrale présente un rayon r₁ de 2,4 µm et son indice présente avec l'indice de la gaine une différence Δn₁ de -5,9.10⁻³.

La partie annulaire s'étend entre les rayons r₁ et r₂ = 5,3 µm, et son indice présente avec l'indice de la gaine une différence Δn₂ de 9,2.10⁻³.

La partie enterrée s'étend entre les rayons r₂ et r₃ = 8,4 µm; elle présente par rapport à la gaine une différence d'indice Δn₃ de -5,9.10⁻³.

On obtient avec le profil d'indice de la figure 6 une fibre ayant les caractéristiques suivantes:
- longueur d'onde de coupure théorique λ_{cth} : 1630 nm
- longueur d'onde λ₀ d'annulation de la dispersion chromatique : 1430 nm;
- pente de dispersion chromatique à 1550 nm : 0,063 ps/(nm².km);
- dispersion chromatique à 1550 nm : 8 ps/(nm.km);
- rayon de mode W02 à 1550 nm : 3,9 µm;
- aire effective à 1550 nm : 102 µm²;
- atténuation du fait des courbures : 3.10⁻⁵ dB;
- sensibilité aux micro-courbures à 1550 nm: 0,75.

De nouveau, des variations des rayons et des variations des différences d'indice par rapport aux valeurs de consigne de la figure sont possibles, tout en obtenant toujours une fibre selon l'invention. Le tableau suivant donne les plages de variation autour des valeurs de consigne, avec les mêmes unités.

| r₁ | r₂ | r₃ | Δn₁ | Δn₂ | Δn₃ |
|---|---|---|---|---|---|
| 2,4±0,2 | 5,3±0,5 | 8,4±0,8 | -5,9±0,5 | 9,2±0,5 | 5,9±0,5 |

La figure 7 montre un graphe de la dispersion en fonction de la longueur d'onde pour les différentes fibres selon l'invention; on a porté à la figure en ordonnée la longueur d'onde en µm, entre 1,5 et 1,64 µm. On a porté en abscisse la dispersion chromatique à 1550 nm, en ps/(nm.km). La figure montre les variations de la dispersion en fonction de la longueur d'onde pour les fibres des premier à sixième mode de réalisation décrits plus haut. On constate sur la figure que la dispersion chromatique vaut 8 ps/(nm.km) à 1550 nm pour toutes les fibres, et reste comprise entre 7 et 14 ps/(nm.km) pour des valeurs de longueur d'onde comprises entre 1530 et 1620 nm, pour toutes les fibres données à titre d'exemple.

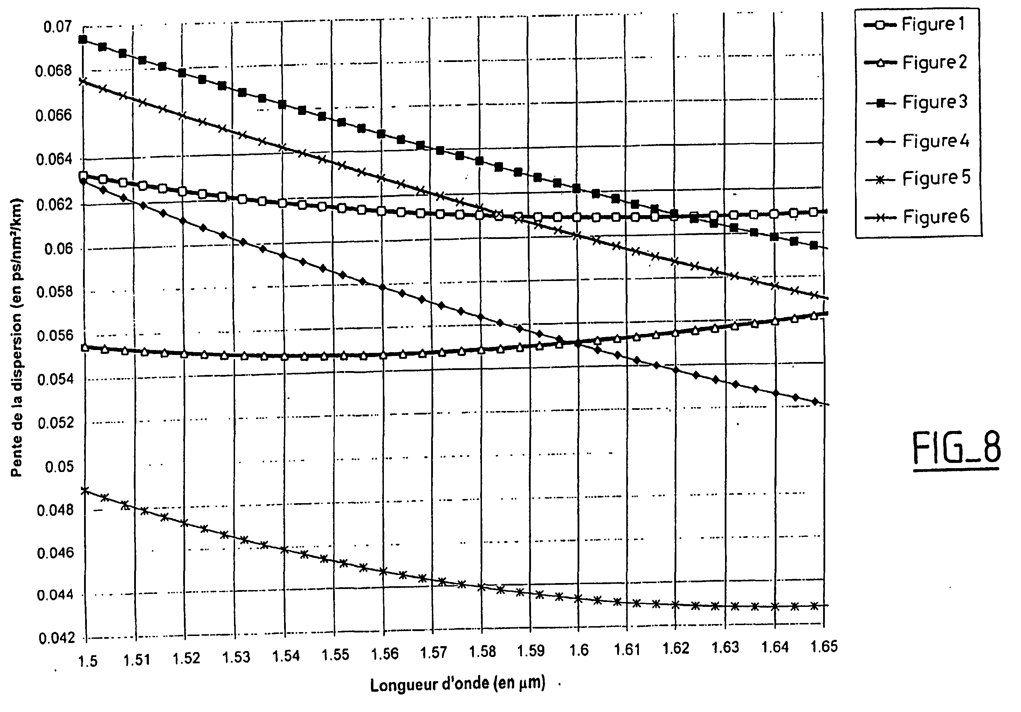

La figure 8 montre un graphe de la pente de dispersion en fonction de la longueur d'onde pour les différentes fibres données à titre d'exemple. Est portée en abscisse la longueur d'onde en micromètres, et en ordonnée la pente de la dispersion chromatique en ps/(nm².km). Les différentes courbes donnent les variations de la pente de dispersion chromatique, en fonction de la longueur d'onde, pour les fibres des premier à sixième mode de réalisation décrits plus haut.

On constate sur la figure que la pente de la dispersion chromatique à 1550 nm reste dans tous les cas inférieure à 0,07 ps/(nm².km). Pour le cinquième mode de réalisation de l'invention, la pente de la dispersion chromatique à 1550 nm est inférieure à 0,05 ps/(nm².km).

L'invention peut être fabriquée par l'homme du métier à l'aide de techniques connues, comme le MCVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art. Il est clair que les profils des figures 1 à 6 ne sont donnés qu'à titre d'exemple, et que d'autres profils peuvent permettre d'obtenir des fibres présentant les caractéristiques de l'invention.

## Revendications

1. Une fibre optique monomode présentant, pour une longueur d'onde de 1550 nm :
- une aire effective supérieure ou égale à 60 µm²; et
- une pente de dispersion chromatique inférieure en valeur absolue à 0,07 ps/(nm².km).
**charactérisée en ce qu'**elle présente
- une dispersion chromatique comprise entre 6 et 10 ps/(nm.km).

2. La fibre selon la revendication 1, **caractérisée en ce qu'**elle présente une dispersion chromatique à 1550 nm entre 7 et 9 ps/(nm.km).

3. La fibre selon la revendication 1 ou 2, **caractérisée en ce qu'**elle présente une dispersion chromatique supérieure ou égale à 7 ps/(nm.km) entre 1530 et 1620 nm.

4. La fibre selon la revendication 1, 2 ou 3, **caractérisée en ce qu'**elle présente une pente de dispersion chromatique à 1550 nm inférieure à 0,05 ps/(nm².km).

5. La fibre selon l'une des revendications 1 à 4, **caractérisée en ce qu'**elle présente une surface effective supérieure ou égale à 90 µm²;

6. La fibre selon l'une des revendications 1 à 5, **caractérisée en ce qu'**elle présente un rayon de mode à 1550 nm supérieur à 4 µm.

7. La fibre selon l'une des revendications 1 à 6, **caractérisée en ce qu'**elle présente une atténuation à 1550 nm inférieure ou égale à 0,23 dB/km.

8. La fibre selon l'une des revendications 1 à 7, **caractérisée en ce qu'**elle présente une dispersion modale de polarisation inférieure ou égale à 0,08 ps.km^{-0,5}.

9. La fibre selon l'une des revendications 1 à 8, **caractérisée en ce qu'**elle présente un profil d'indice en trapèze avec anneau.

10. La fibre selon l'une des revendications 1 à 8, **caractérisée en ce qu'**elle présente un profil d'indice coaxial avec anneau.

11. La fibre selon l'une des revendications 1 à 8, **caractérisée en ce qu'**elle présente un profil d'indice coaxial avec une partie externe enterrée.

12. Un système de transmission à fibre optique à multiplexage en longueurs d'onde, comprenant comme fibre de ligne de la fibre selon l'une des revendications 1 à 11.

13. Le système de transmission selon la revendication 12, comprenant en outre de la fibre de compensation de dispersion.

## Patentansprüche

1. Optische Einmodenfaser, welche für eine Wellenlänge von 1550 nm aufweist:
- eine effektive Fläche von größer oder gleich 60 µm²; und
- eine Steigung der chromatischen Dispersion von im Absolutwert weniger als 0,07 ps/(nm² · km),
**dadurch gekennzeichnet,**
**dass** sie eine chromatische Dispersion aufweist, welche zwischen 6 und 10 ps/(nm · km) enthalten ist.

2. Faser nach Anspruch 1,
**dadurch gekennzeichnet,**
**dass** sie bei 1550 nm eine chromatische Dispersion zwischen 7 und 9 ps/(nm · km) aufweist.

3. Faser nach Anspruch 1 oder 2,
**dadurch gekennzeichnet,**
**dass** sie zwischen 1530 und 1620 nm eine chromatische Dispersion von größer oder gleich 7 ps/(nm · km) aufweist.

4. Faser nach Anspruch 1, 2 oder 3,
**dadurch gekennzeichnet,**
**dass** sie bei 1550 nm eine Steigung der chromatischen Dispersion von weniger als 0,05 ps/(nm² · km) aufweist.

5. Faser nach einem der Ansprüche 1 bis 4,
**dadurch gekennzeichnet,**
**dass** sie eine effektive Fläche von größer oder gleich 90 µm² aufweist.

6. Faser nach einem der Ansprüche 1 bis 5,
**dadurch gekennzeichnet,**
**dass** sie bei 1550 nm einen Modenradius von mehr als 4 µm aufweist.

7. Faser nach einem der Ansprüche 1 bis 6,
**dadurch gekennzeichnet,**
**dass** sie bei 1550 nm eine Dämpfung von kleiner oder gleich 0,23 dB/km aufweist.

8. Faser nach einem der Ansprüche 1 bis 7,
**dadurch gekennzeichnet,**
**dass** sie eine Polarisationsmodendispersion von kleiner oder gleich 0,08 ps · km^{-0,5} aufweist.

9. Faser nach einem der Ansprüche 1 bis 8,
**dadurch gekennzeichnet,**
**dass** sie ein Indexprofil in Form eines Trapez mit Ring aufweist.

10. Faser nach einem der Ansprüche 1 bis 8,
**dadurch gekennzeichnet,**
**dass** sie ein koaxiales Indexprofil mit Ring aufweist.

11. Faser nach einem der Ansprüche 1 bis 8,
**dadurch gekennzeichnet,**
**dass** sie ein koaxiales Indexprofil mit einem tiefliegenden äußeren Abschnitt aufweist.

12. Wellenlängenmultiplexübertragungssystem mit optischer Faser, umfassend als Leitungsfaser die Faser nach einem der Ansprüche 1 bis 11.

13. Übertragungssystem nach Anspruch 12, umfassend außerdem die Faser zur Dispersionskompensation.

## Claims

1. A single-mode optical fibre having, for a wavelength of 1550 nm:
- an effective area greater than or equal to 60 µm²;
and
- a chromatic dispersion slope of absolute magnitude less than 0.07 ps/(nm².km),
**characterised in that** it has
- a chromatic dispersion of between 6 and 10 ps/(nm.km) inclusive.

2. The fibre according to claim 1, **characterised in that** it has a chromatic dispersion at 1550 nm of between 7 and 9 ps/(nm.km).

3. The fibre according to claim 1 or 2, **characterised in that** it has a chromatic dispersion greater than or equal to 7 ps/(nm.km) between 1530 and 1620 nm.

4. The fibre according to claim 1, 2 or 3, **characterised in that** it has a chromatic dispersion slope at 1550 nm of less than 0.05 ps/(nm².km).

5. The fibre according to one of claims 1 to 4, **characterised in that** it has an effective surface area greater than or equal to 90 µm².

6. The fibre according to one of claims 1 to 5, **characterised in that** it has a mode radius at 1550 nm greater than 4 µm.

7. The fibre according to one of claims 1 to 6, **characterised in that** it has an attenuation at 1550 nm of less than or equal to 0.23 dB/km.

8. The fibre according to one of claims 1 to 7, **characterised in that** it has a polarisation mode dispersion of less than or equal to 0.08 ps.km^{-0.5}.

9. The fibre according to one of claims 1 to 8, **characterised in that** it has an index profile in the shape of a trapezium with a ring.

10. The fibre according to one of claims 1 to 8, **characterised in that** it has a coaxial-with-ring index profile.

11. The fibre according to one of claims 1 to 8, **characterised in that** it has a coaxial index profile with a depressed external portion.

12. An optical fibre transmission system having wavelength multiplexing, comprising fibre according to one of claims 1 to 11 as line fibre.

13. The transmission system according to claim 12, additionally comprising dispersion compensation fibre.
